# EUROPÄISCHE PATENTSCHRIFT

(11) **EP 1 280 268 B1**
(45) Veröffentlichungstag und Bekanntmachung des Hinweises auf die Patenterteilung: **11.11.2020**
(21) Anmeldenummer: 02014682.5
(22) Anmeldetag: 03.07.2002
(51) Int. Cl.: H02K 29/10, H02K 19/10

(54) **Optische Rotationserfassungseinrichtung für einen Reluktanzmotor**
Optical rotation detection device for a reluctance motor
Dispositif de détection optique de rotation pour un moteur à réluctance

(30) Priorität: 16.07.2001 DE 10135689
(43) Veröffentlichungstag der Anmeldung: 29.01.2003
(73) Patentinhaber: Vorwerk & Co. Interholding GmbH, 42275 Wuppertal (DE)
(72) Erfinder: Caldewey, Uwe, Dipl.-Ing, 44229 Dortmund (DE); Poppen, Günter, Dr.-Ing., 42277 Wuppertal (DE)
(74) Vertreter: Müller, Enno

(56) Entgegenhaltungen:
- EP-A- 0 874 442
- EP-A2- 0 630 097
- DE-A1- 10 035 540
- US-A- 4 773 829
- US-A- 5 866 962
- US-A- 5 877 568
- PATENT ABSTRACTS OF JAPAN Bd. 1998, Nr. 08, 30. Juni 1998 (1998-06-30) -& JP 10 066310 A (SECOH GIKEN INC), 6. März 1998 (1998-03-06)

## Beschreibung

Die Erfindung betrifft eine Drehzustand-Erfassungseinrichtung nach den Merkmalen des Oberbegriffes des Anspruches 1.

Bei geschalteten Reluktanzmotoren, welche allgemein bekannt sind, hängt die Größe des Drehmomentes von der Lage des Rotors zum Statorfeld ab. Um das maximale Moment im Motor zu erreichen, müssen die Statorströme und damit das Statorfeld abhängig von der Rotorlage gesteuert werden.

Bei einer aus der US 5, 866,962 A1 bekannten Drehzustand-Erfassungseinrichtung sind in gleichmäßiger Winkelverteilung einzelne Geberausformungen vorgesehen. Diese durchlaufen umfangsmäßig beabstandet drei Sensoren. Aus der EP 0 874 442 A2 ist eine Geberscheibe für einen Elektromotor bekannt, bei welcher in regelmäßiger Umfangsverteilung beabstandet segmentartige Durchbrüche vorgesehen sind. Die US-A-4773829 beschreibt eine Geberscheibe eines Elektromotors, bei welcher an Stelle von Geberausformungen Magnetelemente vorgesehen sind. Die DE 10035540 A1 offenbart einen Reluktanzmotor mit einer Geberscheibe und umfangsmäßig gleich verteilten Geberausformungen, die mit einer Sensorschranke zusammenwirken. Gleiches ist auch aus der US 5 877 568 A bekannt.

Ausgehend von dem zunächst genannten Stand der Technik stellt sich der Erfindung die Aufgabe, eine verbesserte Drehzustand-Erfassungseinrichtung für einen Reluktanzmotor anzugeben.

Diese Aufgabe ist beim Gegenstand des Anspruches 1 gelöst, wobei darauf abgestellt ist, dass jedem Rotorsegment ein Paar umfangsbenachbarter Geberausformungen zugeordnet sind, die zwischen sich jeweils einen bestimmten Abstand aufweisen, dass zwischen zwei Geberausformungen umfangsbenachbarter Paare von Geberausformungen eine bestimmte Distanz vorgesehen ist, dass mindestens zwei hinsichtlich der Geberausformungen umfangsmäßig versetzt angeordnete Sensoren vorgesehen sind und dass der Umfangsabstand zwischen den Sensoren verschieden ist zu dem Abstand und zu der Distanz zweier umfangsbenachbarter Geberausformungen bzw. Paaren von Geberausformungen, wobei weiter der Abstand kleiner ist als die Distanz.

Die Geberscheibe besitzt eine eindeutig definierte Zuordnung zur Rotorposition, wodurch mittels geeigneter Maßnahmen letztere eindeutig bestimmt werden kann. Zufolge dessen ist durch Steuerung der Statorströme ein optimales Motormoment auch bei niedrigen Drehzahlen erreichbar. Bei einem Rotor, welcher durch Schichtung übereinander angeordneter Rotorbleche gebildet ist, kann die Geberscheibe in vorteilhafter Weise zugleich eine Haltescheibe der Rotorbleche ausbilden. Hierzu ist die Haltescheibe der Rotorbleche auf einem möglichst großen Außenradius zylinderförmig ausgeprägt, auf welchem Zylinder bspw. geeignete Kreissegmente entfernt sind. In einer vorteilhaften Weiterbildung des Erfindungsgegenstandes ist vorgesehen, dass oberhalb der Geberscheibe ein Träger für Elektronikbauteile angeordnet ist. Bevorzugt erstreckt sich dieser Träger - Leiterplatte - parallel zur Ausrichtung der Rotorbleche, demnach senkrecht zur Rotorachse. Diese Leiterplatte ist bevorzugt Träger für Elektronikbauteile, so bspw. zur Lageerfassung des Rotors. Der Träger ist hierbei ortsfest angeordnet und kann des Weiteren der Kontaktierung der Spulen dienen. So können Anschlüsse der Spulen über diese hinausragen, so dass sie in die Leiterplatte beziehungsweise in den Träger leitend eintauchen können. Auf der Leiterplatte befinden sich Leiterbahnen, die die Spulen bei Montage der Leiterplatte in den Motor direkt automatisch, eindeutig miteinander verbinden. Als weiter vorteilhaft erweist sich hierbei, dass die Leiterplatte einen kreisscheibenförmigen Grundriss mit nach außen über den Statorkern abragendem Anschlussabschnitt aufweist, wobei der kreisscheibenförmige Grundriss im Durchmesser dem Innendurchmesser des Statörkerns angepasst ist. Im Bereich des nach außen abragenden Anschlussabschnittes ist ein Platinenrandstecker anordbar, über welchen die Spulenpaare eindeutig identifiziert werden können. Zudem kann bei einer relativ groß gewählten Leiterplattenfläche die gesamte Elektronik oder zumindest Teile davon auf der Leiterplatte beziehungsweise dem Träger integriert werden. Dies bietet gleichzeitig den Vorteil einer sehr kurzen Leiterbahnführung, so dass EMV-Störungen vermieden oder zumindest verringert werden. Zudem kann vorgesehen sein, dass die Leiterplatte eine Umrichtungselektronik zum links- als auch rechtsdrehbaren Antreiben des Motors aufweist. Des Weiteren wird bevorzugt, die Auswerteelektronik zur Erfassung der Rotorposition und der Statorstrom-Steuerung auf dem Träger zu platzieren. Um eine kompakte Bauform zu erreichen, ist in einer vorteilhaften Weiterbildung des Erfindungsgegenstandes vorgesehen, dass die Elektronikbauteile unterseitig des Trägers, der Geberscheibe zugewandt, angeordnet sind. So ist bei einer beispielhaften hohlzylindrischen Ausgestaltung der Geberscheibe eine Verschachtelung derselben mit den Elektronikbauteilen denkbar. Auch ergibt sich hierdurch eine zusätzliche Kühlung der Elektronikbauteile durch die rotierende Geberscheibe. Ein zusätzlicher Vorteil ist dadurch erreicht, dass an dem Träger unterseitig Sensoren angeordnet sind, die mit der Geberscheibe zusammenwirken. Diese Sensoren dienen der Lageerfassung der Geberscheibe und hierüber die der Rotorsegmente. An der Geberscheibe sind zugeordnet einem Rotorsegment Geberausformungen ausgebildet, die von einem ortsfesten Sensor erfassbar sind. Wie erwähnt, kann die Geberscheibe hohlzylindrisch ausgeformt sein, wobei die Geberausformungen durch fensterartige Freischnitte der, axial ausgerichteten Zylinderwandung der Geberscheibe gebildet sind. Jede Geberausformung ist eindeutig einem Rotorsegment zugeordnet. Jedem Rotorsegment sind zwei Geberausformungen zugeordnet. Entsprechend sind bei einem dreiphasigen Motor in der Konfiguration sechs Statorpole und vier Rotorpole insgesamt acht Geberausformungen vorgesehen, wobei jeweils zwei Geberausformungen ein, einem Rotorsegment zuordbares Ausformungspaar bilden. Zwei Geberausformungen weisen zwischen sich jeweils einen bestimmten Abstand auf. Bei einer Ausgestaltung mit zwei, einem Rotorsegment zuzuordnenden Geberausformungen ist vorgesehen, dass zwischen zwei Geberausformungen umfangsbenachbarter Paare von Geberausformungen eine bestimmte Distanz vorgesehen ist. Diese Distanz ist hierbei größer gewählt als der Abstand zweier Geberausformungen eines Paares zueinander. Eine einfache Rotorlage-Erfassung ist dadurch erreicht, dass mindestens zwei hinsichtlich der Geberausformungen umfangsmäßig versetzt angeordnete Sensoren vorgesehen sind. Das umfangsmäßige Versetzmaß der Sensoren zueinander ist hierbei angepasst an den Abstand der Rotorsegmente zueinander. Der Umfangsabstand zwischen den Sensoren ist verschieden zu dem Abstand und zu der Distanz zweier umfangsbenachbarter Geberausformungen bzw. Paaren von Geberausformungen. Schließlich sind mindestens vier Sensoren vorgesehen, von welchen jeweils zwei als Sensorschranke zusammenwirken. So ist jeweils ein Sender bzw. Empfänger radial außen und ein Empfänger bzw. Sender radial innen der Geberausformungen angeordnet. Die Geberausformungen der Geberscheibe durchtreten bei Rotordrehung die Sensorschranken, woraus sich ein Detektierungsschema ergibt, welches drei unterschiedliche Positionen unterscheiden kann. Entsprechend der erfassten Position sind die Statorströme zur Motoroptimierung steuerbar.

Nachstehend ist die Erfindung anhand der beigefügten Zeichnung, welche lediglich mehrere Ausführungsbeispiele darstellt, näher erläutert. Es zeigt:
Fig. 1 in perspektivischer Darstellung einen Rotor eines Reluktanzmotors mit einer drehfest mit dem Rotor verbundenen Geberscheibe, eine erste Ausführungsform betreffend, es handelt sich nicht um eine Ausführungsform gemäß der Erfindung;
Fig. 2 eine perspektivische Darstellung des Reluktanzmotors mit einem Rotor gemäß Fig. 1, wobei oberhalb der Geberscheibe ein Träger für Elektronikbauteile angeordnet ist;
Fig. 3 eine zweite Ausführungsform eines Rotors mit einer Geberscheibe, mit angedeuteten, unterseitig eines Trägers für Elektronikbauteile angeordneten und der Geberscheibe zugewandten Sensoren;
Fig. 4 eine schematische Draufsicht auf den, die Sensoren unterseitig tragenden Träger für Elektronikbauteile, mit strichpunktiert dargestellter Anordnung von Statorspulen;
Fig. 5 den Schnitt gemäß der Linie V-V in Fig. 4;
Fig. 6 eine schematische Ansicht auf den Rotor und die Statorspulen unter Fortlassung des Trägers für Elektronikbauteile, jedoch bei strichpunktiert dargestellter Anordnung der Sensoren;
Fig. 7 ein Ablaufdiagramm, die Signale der beiden, mit der Geberscheibe des Rotors zusammenwirkenden Sensoren in Abhängigkeit von der Rotorumdrehung betreffend;
Fig. 8 eine der Fig. 3 entsprechende perspektivische Darstellung, jedoch eine weitere Ausführungsform des Rotors betreffend, es handelt sich nicht um eine Ausführungsform gemäß der Erfindung;
Fig. 9 eine der Fig. 6 entsprechende schematische Draufsicht, jedoch die Ausführungsform gemäß Fig. 8 betreffend;
Fig. 10 ein Ablaufdiagramm gemäß Fig. 7, bezogen auf die Ausführungsform gemäß den Fig. 8 und 9.

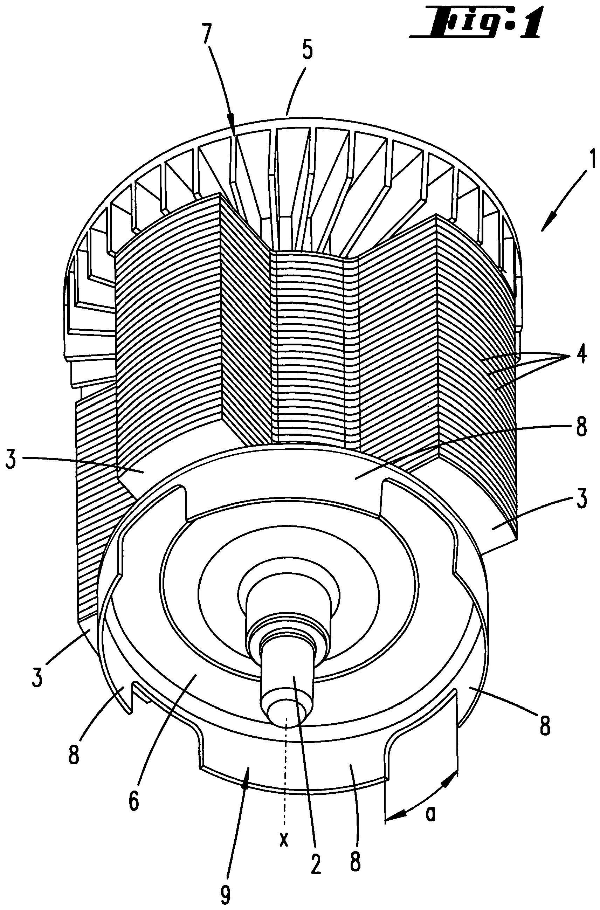

Dargestellt und beschrieben ist zunächst mit Bezug zu Fig. 1 ein Rotor 1 mit einem Rotorachskörper 2 und vier winkelgleichmäßig um den Rotorachskörper 2 angeordneten Rotorsegmenten 3.

Der Rotor 1 ist hierbei gebildet durch einzelne, drehfest auf dem Rotorachskörper 2 in Achsrichtung übereinander geschichtete Rotorbleche 4, welche zwischen zwei Haltescheiben 5, 6 gefasst sind. Diese Haltescheiben 5, 6 übernehmen hierbei eine Doppelfunktion. So ist die Haltescheibe 5 zugleich als Kühllüfter 7 ausgebildet, mit einem Durchmesser, welcher dem Rotordurchmesser im Bereich der Rotorsegmente 3 etwa entspricht.

Die diesem Kühllüfter 7 gegenüberliegende Haltescheibe 6 ist im Wesentlichen hohlzylindrisch ausgeformt, wobei im Bereich der, von den Rotorblechen 4 fortweisenden Zylinderwandung Segmente freigeschnitten sind, zur Vereinzelung von kreisabschnittförmigen Geberausformungen 8. Die Haltescheibe 6 bildet demnach zugleich eine Geberscheibe 9 aus. Letztere besitzt hierbei eine eindeutig definierte Zuordnung zur Rotorposition, bedingt durch die drehfeste Anordnung der Geberscheibe 9.

In dem dargestellten Ausführungsbeispiel gemäß Fig. 1 sind vier gleichmäßig zueinander beabstandete Geberausformungen 8 ausgebildet, wobei zwischen zwei Geberausformungen 8 ein Abstand a gewählt ist, welcher kleiner ist als die Umfangslänge einer jeden Geberausformung 8. Bezogen auf die Rotationsachse x schließt jede Geberausformung 8 etwa einen Winkel von 60° ein, wobei eine Geberausformung 8 - in einem Grundriß betrachtet - mittig eines Rotorsegmentes 3 beginnt und mit Abstand vor dem beabstandeten nächsten Rotorsegment 3 endet.

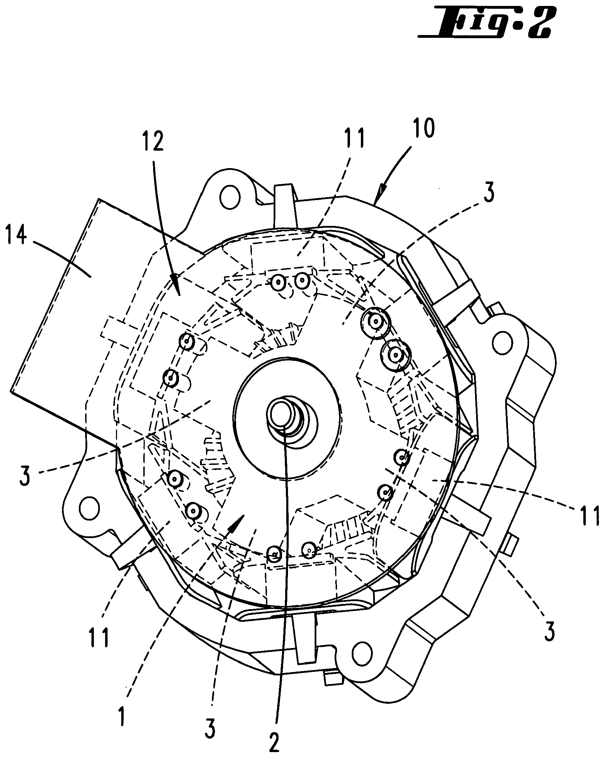

Der in Fig. 1 dargestellte vierpolige Rotor 1 ist zuordbar einem Stator 10 mit sechs winkelgleichmäßig um die Rotationsachse x des Rotors 1 angeordneten Spulen 11 (vgl. Fig. 2).

Im zusammengesetzten Zustand ist oberhalb der Geberscheibe 9 ein durch Anbindung an den Stator 10 ortsfester Träger 12 - Leiterplatte- für Elektronikbauteile angeordnet. Auf diesem Träger 12 befinden sich zunächst Leiterbahnen 13, über welche die Wicklungen der Spulen 11 automatisch eindeutig miteinander verbunden sind.

Der Träger 12 weist einen im Wesentlichen kreisscheibenförmigen Grundriss mit nach außen über den Stator 10 abragendem Anschlussabschnitt 14 auf, wobei der kreisscheibenförmige Grundriss im Durchmesser dem Innendurchmesser des Statorkerns etwa angepasst ist. Im Bereich des Anschlussabschnittes 14 können über einen Platinenrandstecker die Spulen 11 eindeutig identifiziert werden.

Ferner befindet sich auf dem Träger 12 eine Sensorik, die bei einem dreiphasigen Motor in der dargestellten Konfiguration mit sechs Statorspulen 11 und vier Rotorpolen (Rotorsegmente 3) aus mindestens zwei hinsichtlich der Geberausformungen 8 umfangsmäßig versetzt angeordneten Sensoren 15 besteht.

Die in dem ersten Ausführungsbeispiel gemäß den Fig. 1 und 2 nicht dargestellten Sensoren 15 stehen in bekannter Winkelbeziehung zu den einzelnen Spulen 11, so dass die phasenrichtige Zuordnung der Sensorsignale eindeutig realisiert wird.

Die Signale der Sensorik werden ebenfalls auf den Rand des Trägers 12, d. h. in den Bereich des Anschlussabschnittes 14 gelegt, so dass auch hier wieder mit einem Platinenrandstecker oder Ähnlichem die Verbindung zur Elektronik hergestellt werden kann.

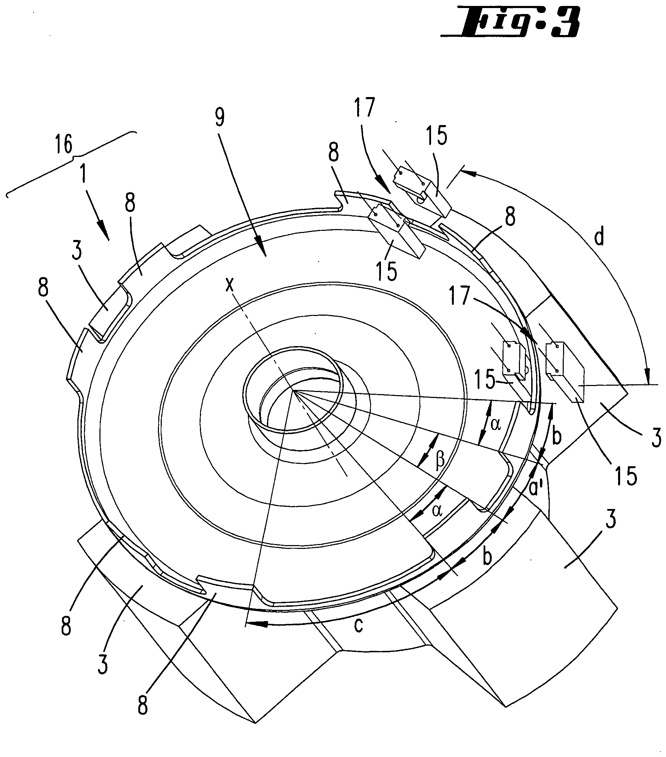

In Fig. 3 ist eine zweite Ausführungsform eines vierpoligen Rotors 1 für einen 4/6-Reluktanzmotor dargestellt. Dieser unterscheidet sich zu dem zuvor beschriebenen Ausführungsbeispiel in der Ausgestaltung der Geberscheibe 9. Hier sind aus der Zylinderwandung der Geberscheibe 9 jeweils ein, einem Rotorsegment 3 zugeordnetes Paar 16 von Geberausformungen 8 freigeschnitten, wobei jede Geberausformung 8 eines Paares 16 bezogen auf die Rotationsachse x einen Winkel α von 15° einschließt und der Abstand a zwischen den Geberausformungen 8 eines Paares 16 dem Umfangserstreckungsmaß b einer Geberausformung 8 entspricht. Die sich gegenüberliegenden Randkanten benachbarter Geberausformungen 8 eines Paares 16 schließen demnach gleichfalls einen Winkel β von 15° ein.

Die Zuordnung der Geberausformungen 8 zu den Rotorsegmenten 3 ist eindeutig. So ist jeweils eine Geberausformung 8 eines Paares 16 mittig des zugeordneten Rotorsegmentes 3 positioniert. Die andere Geberausformung 8 des Paares 16 ist je nach Drehrichtung des Rotors 1 winkelversetzt zu der ersten Geberausformung 8 vor beziehungsweise hinter dem Rotorsegment 3 angeordnet.

Die unterseitig der Leiterplatte - Träger 12 -, d. h. der Geberscheibe 9 zugewandt, angeordneten Sensoren 15 bilden Sensorschranken 17 aus. Bevorzugt sind, wie dargestellt, zwei Paare von Sensoren 15 zur Bildung zweier, hinsichtlich der Geberausformungen 8 umfangsmäßig versetzt angeordnete Sensorschranken 17, wobei jeweils ein Sender bzw. Empfänger radial außen und ein Empfänger bzw. Sender radial innen der Geberausformungen 8 positioniert ist. Der Umfangsabstand d zwischen den Sensoren 15 beziehungsweise den Sensorschranken 17 ist verschieden zu dem Abstand a' zwischen den Geberausformungen 8 eines Paares 16 und der Distanz c zweier umfangsbenachbarter Geberausformungen 8. In der dargestellten Konfiguration ist ein Umfangsabstand d zwischen den Sensorschranken 17 gewählt, welcher größer ist als der Abstand a' zwischen zwei Geberausformungen 8 eines Paares 16. Konkret sind hier die Sensorschranken 17 so angeordnet, dass diese, bezogen auf die Rotationsachse x, einen Winkel von ca. 45° einschließen.

Weiter sind die Sensorschranken 17 so unterseitig des Trägers 12 angeordnet, dass die drehfest mit dem Rotor 1 verbundenen Geberausformungen 8 die Sensorschranken 17 durchlaufen.

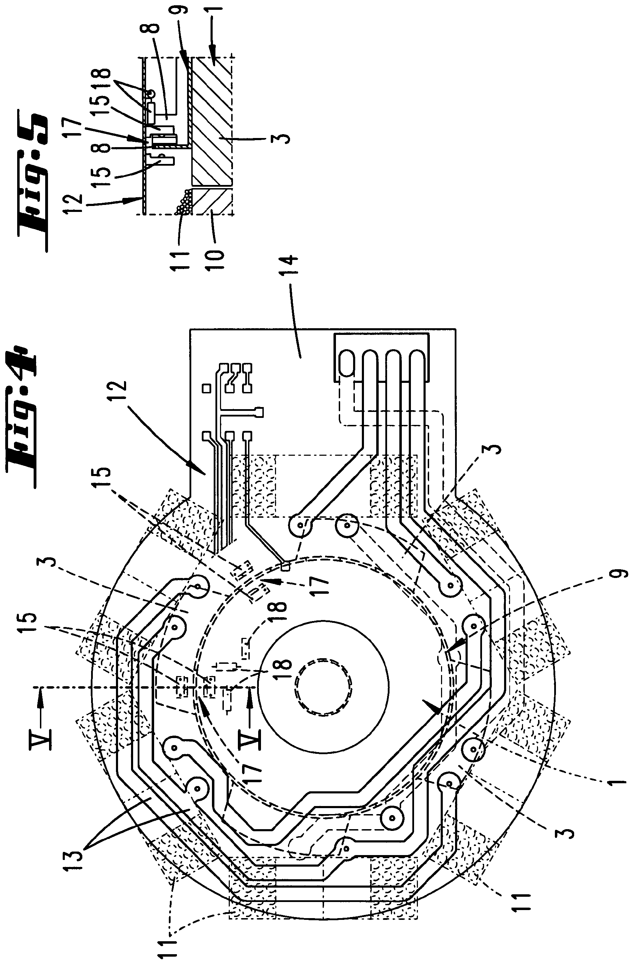

Wie weiter aus den Fig. 4 und 5 zu erkennen, können weitere Elektronikbauteile 18, bspw. zur Auswertung der Sensorsignale und zur Ansteuerung der Spulen 11 in Abhängigkeit von den Sensorsignalen, gleichfalls unterseitig, der Geberscheibe 9 zugewandt an dem Träger 12 - Leiterplatte - angeordnet sein. So können diese Elektronikbauteile 18 in den, durch die Zylinderwandung der Geberscheibe 9 gebildeten Innenraum hineinragen, wodurch die Elektronikbauteile 18 nicht nachteilig auf die Motorenbauhöhe - axiale Erstreckung des Motors - negativ beitragen. Des weiteren erfahren die Elektronikbauteile 18 in einer solchen Anordnung durch die rotierende Geberscheibe 9 eine zusätzliche Kühlung.

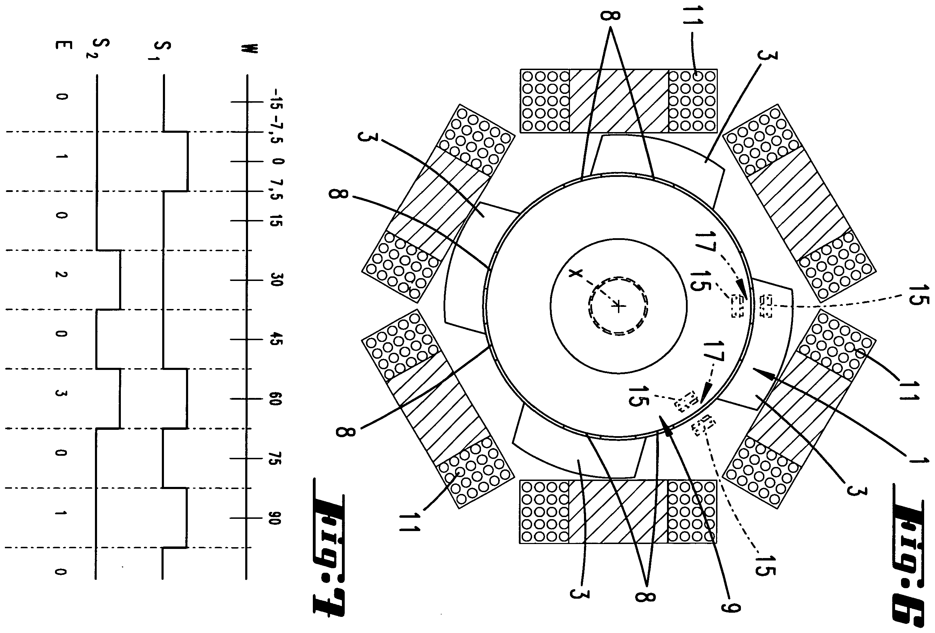

Durch die vorbeschriebene Anordnung der Sensoren 15 und die Konfiguration der Geberscheibe 9 ist eine eindeutige Lageerkennung der Rotorsegmente 3 in Abhängigkeit zu den Spulen 11 erreichbar. In Fig. 7 ist ein entsprechendes Ablaufschema dargestellt, wobei unter W die Rotorwinkel abgetragen sind. S1 zeigt die Sensorsignale einer ersten Sensorschranke beim Durchlauf der Geberausformungen 8 und S2 die Signale der zweiten Sensorschranke, jeweils in Abhängigkeit zum Rotorwinkel. Es ist zu erkennen, dass ein Detektierungsschema erreicht ist, welches vier unterschiedliche Ergebnisse E hervorbringt. Der Ergebniswert ist digital, so dass Ergebniswerte zwischen 0 und 3 erreicht werden können.

Entspricht das Ergebnis dem Wert 1, 2 oder 3 ist bei dieser beispielhaften Ausgestaltung die Rotorlage eindeutig erkannt. Wird hingegen ein Wert E von 0 ermittelt, so entscheidet sich die momentane Rotorlage nach Erfassen des nächsten, zu ermittelnden Wertes.

Eine direkte Gegenüberlage von Rotorsegment 3 und Spule 11 ist dann erreicht, wenn der Ergebniswert E gleich 3 ist, d. h. wenn beide Sensorschranken 17 zeitgleich von Geberausformungen 8 durchfahren werden und ein entsprechendes Signal provozieren.

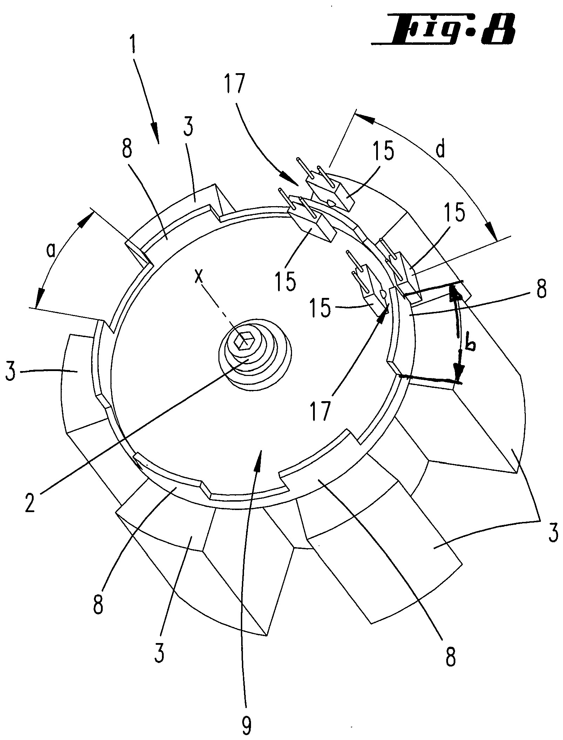

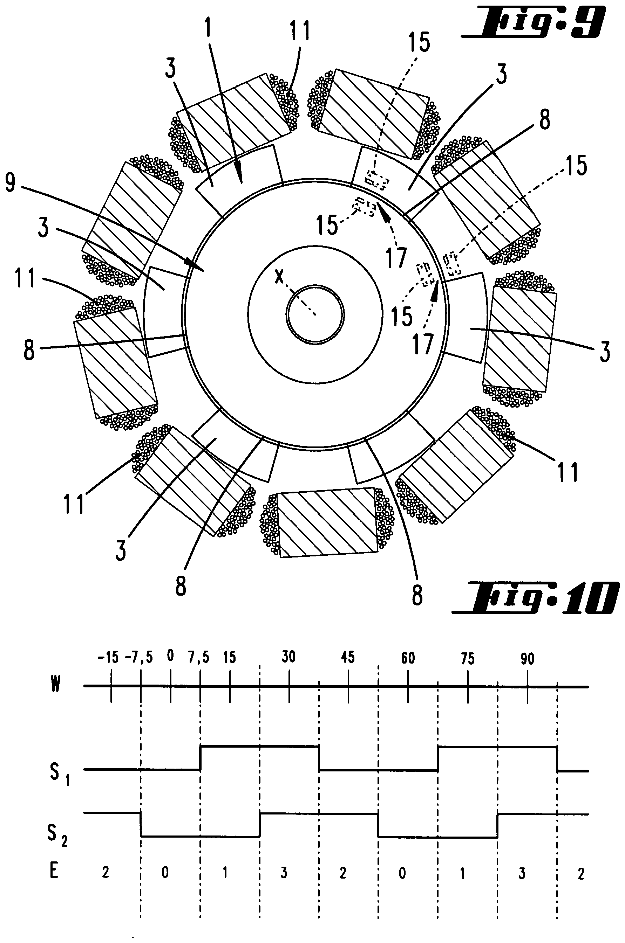

Die Fig. 8 und 9 zeigen eine weitere Ausführungsform eines Rotors 1, welcher hier als 6-poliger Rotor ausgebildet ist. Demnach besitzt der Rotor 1 sechs winkelgleichmäßig um die Rotationsachse x angeordnete Rotorsegmente 3, welche in dem Reluktanzmotor mit acht Spulen 11 zusammenwirken.

Die Geberscheibe 9 besitzt hier gleich der Anzahl von Rotorsegmenten 3, nämlich sechs Geberausformungen 8, wobei jede Geberausformung 8 umfangsmäßig auf Höhe eines Rotorsegmentes 3 angeordnet ist.

Der Abstand a zwischen den Geberausformungen 8 entspricht etwa dem Umfangsmaß b jeder Geberausformung 8, so dass letztere, bezogen auf die Rotationsachse x einen Winkel α von ca. 30° einschließen.

Auch hier sind unterseitig des Trägers 12 für die Elektronikbauteile 18 Sensoren 15 in Form zweier Sensorenschranken 17 angeordnet, deren Umfangsabstand d zueinander größer bemessen ist als der Abstand a zwischen den Geberausformungen 8. Konkret ist hier bei einem Geberausformungs-Winkel α von 30° ein Winkel zwischen den Sensorschranken 17 von 45° vorgesehen.

Bei dieser Ausgestaltung eines 6/8-Reluktanzmotors ist die Rotorlage in jeder Stellung eindeutig detektierbar. Gemäß dem zuvor beschriebenen Ausführungsbeispiel liegt auch hier der digitale Ergebniswert E zwischen 0 und 3. Jedoch ist in dieser Ausführungsform auch die ergebnislose Position (Ergebnis E gleich 0) eindeutig.

Unabhängig von der Ausgestaltung des Reluktanzmotors als 4/6-Motor (vier Rotorsegmente und sechs Spulen), 6/8-Motor usw. ist jeweils die Positionierung der Sensoren 15 bzw. Sensorschranken 17 zu den Spulen 11 zur Lageerfassung des Rotors 1 wesentlich. Diese korrekte Positionierung ist in einfachster Weise durch den, sowohl die Sensoren 15 tragenden als auch die Spulen 11 kontaktierenden Träger 12 gewährleistet.

## Patentansprüche

1. Drehzustand-Erfassungseinrichtung für einen Reluktanzmotor, wobei der Reluktanzmotor vier oder sechs Rotorsegmente (3), und zugeordnet den vier Rotorsegmenten (3) sechs Spulen (11) oder, zugeordnet den sechs Rotorsegmenten acht Spulen (11), aufweist, wobei weiter drehfest mit den Rotorsegmenten (3) eine Geberscheibe (9) verbunden ist und an der Geberscheibe (9) zugeordnet einem Rotorsegment (3) Geberausformungen (8) ausgebildet sind, die von mehr als einem ortsfesten Sensor (15) erfassbar sind,
**dadurch gekennzeichnet, dass** jedem Rotorsegment (3) ein Paar umfangsbenachbarter Geberausformungen (8) zugeordnet sind, die zwischen sich jeweils einen bestimmten Abstand (a') aufweisen, dass zwischen zwei Geberausformungen (8) umfangsbenachbarter Paare (16) von Geberausformungen (8) eine bestimmte Distanz (c) vorgesehen ist, dass mindestens zwei hinsichtlich der Geberausformungen (8) umfangsmäßig versetzt angeordnete Sensoren (15) vorgesehen sind und dass der Umfangsabstand (d) zwischen den Sensoren (15) verschieden ist zu dem Abstand (a') eines Paares (16) von Geberausformungen (8) und zu der Distanz (c) zweier umfangsbenachbarter Geberausformungen (8), wobei weiter der Abstand (a') kleiner ist als die Distanz (c).

2. Drehzustand-Erfassungseinrichtung nach Anspruch 1, **dadurch gekennzeichnet, dass** ein als Leiterplatte ausgebildeter Träger (12) für Elektronikbauteile (18) angeordnet sind und dass die Sensoren (15) und Elektronikbauteile (18) unterseitig des Trägers (12), der Geberscheibe (9) zugewandt angeordnet sind.

3. Drehzustand-Erfassungseinrichtung nach einem der vorhergehenden Ansprüche, **dadurch gekennzeichnet, dass** die Geberscheibe (9) hohlzylindrisch ausgeformt ist, wobei die Geberauformungen (8) durch fensterartige Freischnitte einer axial ausgerichteten Zylinderwandung der Geberscheibe (9) gebildet sind, wobei jede Geberausformung (8) eindeutig einem Rotorsegment (3) zugeordnet ist.

4. Drehzustand-Erfassungseinrichtung nach einem der vorhergehenden Ansprüche, **dadurch gekennzeichnet, dass** der Rotor (1) durch Schichtung übereinander angeordneter Rotorbleche (4) gebildet ist.

5. Drehzustand-Erfassungseinrichtung nach Anspruch 4, **dadurch gekennzeichnet, dass** sich der Träger (12) parallel zur Ausrichtung der Rotorbleche (4), senkrecht zur Rotorachse erstreckt.

6. Drehzustand-Erfassungseinrichtung nach Ansprüche 2 bis 5, **dadurch gekennzeichnet, dass** der als Leiterplatte ausgebildete Träger (12) ortsfest angeordnet ist und des Weiteren der Kontaktierung der Spulen (11) dient.

7. Drehzustand-Erfassungseinrichtung nach Anspruch 6, **dadurch gekennzeichnet, dass** Anschlüsse der Spulen (11) über die Spulen (11) hinausragen, so dass sie in die Leiterplatte beziehungsweise dem Träger (12) leitend eintauchen.

8. Drehzustand-Erfassungseinrichtung nach einem der Ansprüche 2 bis 7, **dadurch gekennzeichnet, dass** der als Leiterplatte ausgebildete Träger (12) einen kreisscheibenförmigen Grundriss mit nach außen über einen Statorkern abragendem Anschlussabschnitt (14) aufweist, wobei der kreisscheibenförmige Grundriss im Durchmesser dem Innendurchmesser des Statorkerns angepasst ist und im Bereich des nach außen abragenden Anschlussabschnittes (14) ein Platinenrandstecker angeordnet ist, über welchen Spulenpaare eindeutig identifiziert sind.

9. Drehzustand-Erfassungseinrichtung nach einem der vorhergehenden Ansprüche, **dadurch gekennzeichnet, dass** der als Leiterplatte ausgebildete Träger (12) eine Umrichtungselektronik zum links- als aus rechtsdrehenden Antreiben des Motors aufweist.

## Claims

1. Rotational state detection device for a reluctance motor, the reluctance motor having four or six rotor segments (3), and six coils (11) assigned to the four rotor segments (3) or eight coils (11) assigned to the six rotor segments, a transmitter disc (9) further being connected to the rotor segments (3) for conjoint rotation and transmitter formations (8) assigned to a rotor segment (3) being formed on the transmitter disc (9), which formations can be detected by more than one stationary sensor (15), **characterised in that** a pair of circumferentially adjacent transmitter formations (8) are assigned to each rotor segment (3), which formations each have a certain spacing (a') between them, **in that** a certain distance (c) is provided between two transmitter formations (8) of circumferentially adjacent pairs (16) of transmitter formations (8), **in that** at least two sensors (15) arranged circumferentially offset with respect to the transmitter formations (8) are provided and **in that** the circumferential spacing (d) between the sensors (15) is different from the spacing (a') of a pair (16) of transmitter formations (8) and from the distance (c) of two circumferentially adjacent transmitter formations (8), the spacing (a') being smaller than the distance (c).

2. Rotational state detection device according to claim 1, **characterised in that** a carrier (12) designed as a printed circuit board is arranged for electronic components (18) and **in that** the sensors (15) and electronic components (18) are located on the underside of the carrier (12), facing the transmitter disc (9).

3. Rotational state detection device according to either of the preceding claims, **characterised in that** the transmitter disc (9) is shaped as a hollow cylinder, the transmitter formations (8) being formed by window-like cut-outs in an axially aligned cylinder wall of the transmitter disc (9), each transmitter formation (8) being uniquely assigned to a rotor segment (3).

4. Rotational state detection device according to any of the preceding claims, **characterised in that** the rotor (1) is formed by layering rotor sheets (4) arranged one above the other.

5. Rotational state detection device according to claim 4, **characterised in that** the carrier (12) extends in parallel with the alignment of the rotor sheets (4), perpendicularly with respect to the rotor axis.

6. Rotational state detection device according to claims 2 to 5, **characterised in that** the carrier (12) designed as a printed circuit board is stationary and is also used to make contact with the coils (11).

7. Rotational state detection device according to claim 6, **characterised in that** connections of the coils (11) protrude beyond the coils (11) and are therefore immersed conductively into the printed circuit board or the carrier (12).

8. Rotational state detection device according to any of claims 2 to 7, **characterised in that** the carrier (12) designed as a printed circuit board has a circular disc-shaped outline with a connection portion (14) protruding outward over a stator core, the circular disc-shaped outline being adapted in diameter to the inner diameter of the stator core and a circuit board edge connector being arranged in the region of the outwardly protruding connection portion (14), by means of which edge connector coil pairs are uniquely identified.

9. Rotational state detection device according to any of the preceding claims, **characterised in that** the carrier (12) designed as a printed circuit board has conversion electronics to drive the motor counter-clockwise as well as clockwise.

## Revendications

1. Dispositif de détection d'état de rotation pour un moteur à réluctance, dans lequel le moteur à réluctance comporte quatre ou six segments de rotor (3) et six bobines (11) associées aux quatre segments de rotor (3) ou huit bobines (11) associées aux six segments de rotor, dans lequel en outre un disque de capteur (9) est relié fixement en rotation aux segments de rotor (3), et des formations de capteur (8) associées à un segment de rotor (3) sont formées sur le disque de capteur (9) qui peuvent être détectées par plus qu'un capteur fixe (15), **caractérisé en ce que** sont associées à chaque segment de rotor (3) une paire de formations de capteur (8) adjacentes sur la circonférence qui présentent entre elles à chaque fois un espacement déterminé (a'), **en ce qu'**une distance déterminée (c) est prévue entre deux formations de capteur (8) de paires de formations de capteur (16) adjacentes sur la circonférence, **en ce qu'**il est prévu au moins deux capteurs (15) qui sont agencés de manière décalée sur la circonférence par rapport aux formations de capteur (8), et **en ce que** l'espacement circonférentiel (d) entre les capteurs (15) est différent de l'espacement (a') d'une paire (16) de formations de capteur (8) et de la distance (c) de deux formations de capteur (8) adjacentes sur la circonférence, dans lequel en outre l'espacement (a') est plus petit que la distance (c).

2. Dispositif de détection d'état de rotation selon la revendication 1, **caractérisé en ce qu'**est agencé un support (12) pour des composants électroniques (18) qui est conçu en tant que carte de circuit imprimé, et **en ce que** les capteurs (15) et les composants électroniques (18) sont agencés sur le côté inférieur du support (12) et tournés vers le disque de codage (9).

3. Dispositif de détection d'état de rotation selon l'une des revendications précédentes, **caractérisé en ce que** le disque de capteur (9) est réalisé sous forme de cylindre creux, dans lequel les formations de capteur (8) sont formées par des découpes libres en forme de fenêtres d'une paroi cylindrique orientée axialement du disque de capteur (9), chaque formation de capteur (8) étant associée de manière univoque à un segment de rotor (3).

4. Dispositif de détection d'état de rotation selon l'une des revendications précédentes, **caractérisé en ce que** le rotor (1) est formé par la superposition de plaques de rotor (4) agencées les unes au-dessus des autres.

5. Dispositif de détection d'état de rotation selon la revendication 4, **caractérisé en ce que** le support (12) s'étend parallèlement à l'alignement des plaques de rotor (4), perpendiculairement à l'axe du rotor.

6. Dispositif de détection d'état de rotation selon les revendications 2 à 5, **caractérisé en ce que** le support (12) conçu en tant que carte de circuit imprimé, est agencé dans une position fixe et sert en outre à contacter les bobines (11).

7. Dispositif de détection d'état de rotation selon la revendication 6, **caractérisé en ce que** des parties de connexion des bobines (11) dépassent des bobines (11) de manière à pénétrer de manière conductrice dans la carte de circuit imprimé ou le support (12).

8. Dispositif de détection d'état de rotation selon l'une des revendications 2 à 7, **caractérisé en ce que** le support (12) conçu en tant que carte de circuit imprimé, présente un plan de base en forme de disque circulaire avec une partie de raccordement (14) faisant saillie vers l'extérieur d'un noyau de stator, dans lequel le plan de base en forme de disque circulaire est adapté en diamètre au diamètre intérieur du noyau de stator et un connecteur de bord de carte est agencé dans la région de la partie de raccordement (14) faisant saillie vers l'extérieur au moyen duquel des paires de bobines sont identifiées de manière univoque.

9. Dispositif de détection d'état de rotation selon l'une des revendications précédentes, **caractérisé en ce que** le support (12) conçu en tant que carte de circuit imprimé, comprend une électronique d'inversion pour l'entraînement du moteur en rotation à gauche et à droite.
